Europäisches Patentamt

European Patent Office

Office européen des brevets

(19)

(11) **EP 1 457 416 A1**

(12) **EUROPEAN PATENT APPLICATION**
published in accordance with Art. 158(3) EPC

(43) Date of publication:
**15.09.2004 Bulletin 2004/38**

(51) Int Cl.⁷: **B63B 1/40**, B63B 1/10

(21) Application number: **02805474.0**

(86) International application number:
**PCT/JP2002/013230**

(22) Date of filing: **18.12.2002**

(87) International publication number:
**WO 2003/053771 (03.07.2003 Gazette 2003/27)**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **20.12.2001 JP 2001388460**

(71) Applicant: **IHI Marine United Inc.
Tokyo 108-0022 (JP)**

(72) Inventor: **MARUO, Hajime
Yokohama-shi, Kanagawa 231-0833 (JP)**

(74) Representative: **Lord, Hilton David
MARKS & CLERK,
57-60 Lincoln's Inn Fields
London WC2A 3LS (GB)**

(54) **ULTRA-HIGH SPEED VESSEL FORM, AND ULTRA-HIGH SPEED VESSEL**

(57) Forms of a high-speed ship which may be applied to a ship capable of traveling at a very high speed of 40 knots or faster, and which is capable of suppressing the required horsepower to as low a level as possible, and high-speed ships having such forms are provided. Submerged bodies 11 and 12 are placed below the water surface WL at the bow and stern, and the submerged bodies 11 and 12 are connected by a main hull 13 which penetrates the water surface WL. The sectional area curve of the main hull 13 is theoretically determined so that the wave resistance becomes a minimum at a Froude number set at 0.36 or greater.

FIG.1A

## Description

Technical Field

The present invention relates to forms of a high-speed ship which may be applied to a ship capable of traveling at a very high speed of 40 knots or faster, and to high-speed ships having such forms.

This application is based on Japanese Patent Application No. 2001-388460, the content of which is incorporated herein by reference.

Background Art

Recently, increasing the speed of ships has occasionally been the subject of technical developments in the field of shipbuilding. For example, it was reported that the technical development of the form of high-speed ships was planned to be one of the themes of the collaborative development project among the EU countries. Also, with the flow of such technical developments in the field, proposals of new ideas relating to various forms of ships have been made. Moreover, a planned speed of 40 knots is sometimes used as a current concrete target speed.

In Japan, on the other hand, in relation to the discussion relating to modal shift in a transfer system, plans based on a speed of 40 knots or so as a target value for increasing the speed of a ship have been occasionally proposed.

However, besides the field of small ships, no cases have been reported so far in which such a target was successfully achieved in the field of large ships having a displacement of a few thousand tons or greater in any countries in the world.

The reasons for the above situation may be explained as follows. Considering the case of a ship having a length of 200 meters, for example, the Froude number thereof becomes about 0.46 when the ship travels at 40 knots. However, a large peak called a "last hump" appears in the wave resistance at a Froude number of about 0.5 if the ship has an ordinary form. Accordingly, the horsepower required for the ship becomes too large, and hence it becomes impractical.

That is, in order to realize an increase in the speed of a ship to about 40 knots or faster, it is essential to develop a new form for a ship which enables suppressing of the above-mentioned high peak of the resistance to as low as possible.

Disclosure of Invention

The present invention has been achieved in consideration of the above situation, and its purposes include providing a form of a ship which may be applied to a high-speed ship of 40 knots or faster, and which enables suppressing of the level of required horsepower to as low as possible, and to provide a high-speed ship having such a form.

In order to solve the above-mentioned problems, use of the minimum wave resistance theory developed by the inventor of the present invention is employed. The minimum wave resistance theory is a theory to obtain the optimal shape of a ship by which the wave resistance cannot be decreased any further under a given condition. With regard to the viscous resistance, it is not significantly affected by the shape of a ship if the ship has a sufficiently elongated shape, and hence the shape should be the best among all the possible choices. (References: (1) Maruo. H. & Bessho. M.: Ships of Minimum Wave Resistance, Journal of the Society of Naval Architects of Japan, Vol. 114 (1963); (2) Maruo. H. & Yamakoshi. Y: Calculation of the Ship Form of Minimum Wave-Resistance with Finite Draft, Journal of the Society of Naval Architects of Japan, Vol. 130 (1971); and (3) Maruo. H.: Calculation of the Wave Resistance of Ships, the Draught of Which is as Small as the Beam, Journal of the Society of Naval Architects of Japan, Vol. 112 (1962).)

However, it is known that the results obtained using a normal minimum wave resistance theory will give a form which cannot be applied practically for a ship which travels at about 40 knots or faster. Accordingly, in the present invention, the results obtained by the theory are expanded and used for designing a form which is practically applicable to a ship.

[Minimum Wave Resistance Theory]

Here, the minimum wave resistance theory will be explained.

In the primary minimum wave resistance theory, it is considered that the wave resistance is dominated by the displacement distribution along the length of a ship, i.e., by a sectional area curve (a so-called prismatic curve), and the form is determined using the calculus of variations so that the wave resistance becomes a minimum value under a certain condition, such as a constant displacement.

According to this theory, by taking the length of the ship along the x-axis, the width direction of the ship along the y-axis, and the draft direction of the ship along the z-axis, the form of the surface of the ship is expressed by the following equation:

$$y = f(x)\, g(z) \qquad (1)$$

In practice, $g(z) = 1$ is used in order to simplify the calculation.

In this manner, $f(x)$ gives the form of the sectional area curve.

In the ordinary minimum wave resistance theory, $f(x)$ which minimizes the wave resistance under a condition of constant displacement is determined using the calculus of variations. However, in the function obtained as above, values diverge and become infinite at both ends. When the Froude number is small (about 0.3 or less), the infinite value may be expressed by a cylindrical shape of the bow and the stem, and hence a practical form of a ship can be obtained. However, when the Froude number increases, it becomes difficult to adopt the form for a practical ship due to unfavorable phenomenon, such as an increase in the viscous resistance and wave-breaking resistance.

In order to solve the above problems, it is necessary to lower the displacement underneath the water surface at the bow and the stem so that the bow and stem ends of the water line are sharpened. In order to realize this using the simplest method, placement of a point doublet (concentrated spherical body) underwater at the bow and stern is considered. If a function f(x) is calculated which minimizes the wave resistance of such a combination, it becomes apparent that a term which expresses the effect of the point doublet cancels the divergence at the end points of the function f(x) and that it has an effect of sharpening the waterline.

Since the point doublet indicates a sphere, such a form of a ship means a ship provided with a bulb at the bow and stem thereof. When the Froude number is small, the form may be adopted as a practical form of a ship. However, at a high speed exceeding a Froude number of 0.36, the size of the bulb becomes too large and cannot be placed below the waterline of the bow and stem of a ship. Thus, it cannot give a practical form of a ship. Accordingly, a concept different from the form of a ship provided with bulbs becomes necessary in order to obtain a practical form of a ship.

[Practical Form of High-Speed Ship]

In order to solve the above-mentioned problems associated with the minimum wave resistance theory, the following form of a ship according to the present invention is proposed.

First, submerged bodies, each of which has substantially the same size (volume), are placed underwater at the bow and the stern of a ship. It is considered that, when the Froude number is significantly large (i.e., the Froude number is 0.36 or greater), the wave-making effect due to the submerged body is equivalent to that of a point doublet which is placed approximately at the point of the center of gravity. At this time, assuming that the strength of the doublet is M/4 $\pi$, the relationship with respect to the volume $\nabla_B$ of the submerged body may be approximately regarded as:

$$M = (1 + k_x) V_o \nabla_B \qquad (2)$$

where $k_x$ is an inertia coefficient in the length direction of the submerged body, and $V_o$ is a traveling speed. Here, considering a hull (a main body of a ship) which penetrates the water surface and includes its ends located at the point of the center of gravity of each of the submerged bodies, it becomes possible to select a sectional area of the main body of the ship so that the wave resistance becomes a minimum by applying the minimum wave resistance theory to the combinations of the main body with the point doublets.

That is, the form of high-speed ships according to the present invention is characterized by placing submerged bodies each having substantially the same volume underwater at the bow and the stern of a ship and connecting the submerged bodies with the main body penetrating the water surface. Also, the sectional area curve of the above-mentioned main body of the ship is theoretically determined so that the wave resistance is minimized at a Froude number set to be 0.36 or greater. Moreover, in high-speed ships having this form, the volume (displacement) of the submerged bodies is determined first and then the form of the main body of the ship connecting the submerged bodies is determined.

At that time, the form of the submerged bodies may be arbitrarily selected such that do not cause an increase in resistance due to viscous separation, and it is preferable, as a non-spherical shape, to select a streamlined shape, for example. Also, the rear end of the submerged body at the stem may be selected to have a sharp ended axisymmetric body or a similar shape so that it may be suitable as equipment of a propulsion device. Note that since the form is generally difficult to apply to a mono-hull ship due to an insufficient lateral restoring force, it is preferable to apply it to a multi-hull ship having a plurality of main bodies.

Brief Description of the Drawings

FIG. 1 is a diagram showing an example of a form of a high-speed ship according to an embodiment of a high-speed ship of the present invention, FIG. 1A shows a side view, FIG. 1B shows a plan view from the bottom of the ship, and FIG. 1C shows a transverse cross-sectional view at the center of the ship.

FIG. 2 is a graph showing wave resistance curves of a high-speed ship having a form according to an embodiment of the present invention, and of a ship having a conventional form.

FIG. 3 is a diagram showing an example in which a form of a high-speed ship according to the present invention is applied to a catamaran ship.

FIG. 4 is a diagram showing an example in which a form of a high-speed ship according to the present invention is applied to a trimaran ship.

Best Mode for Carrying Out the Invention

Next, a high-speed ship obtained by using the form of a ship according to the present invention will be explained.

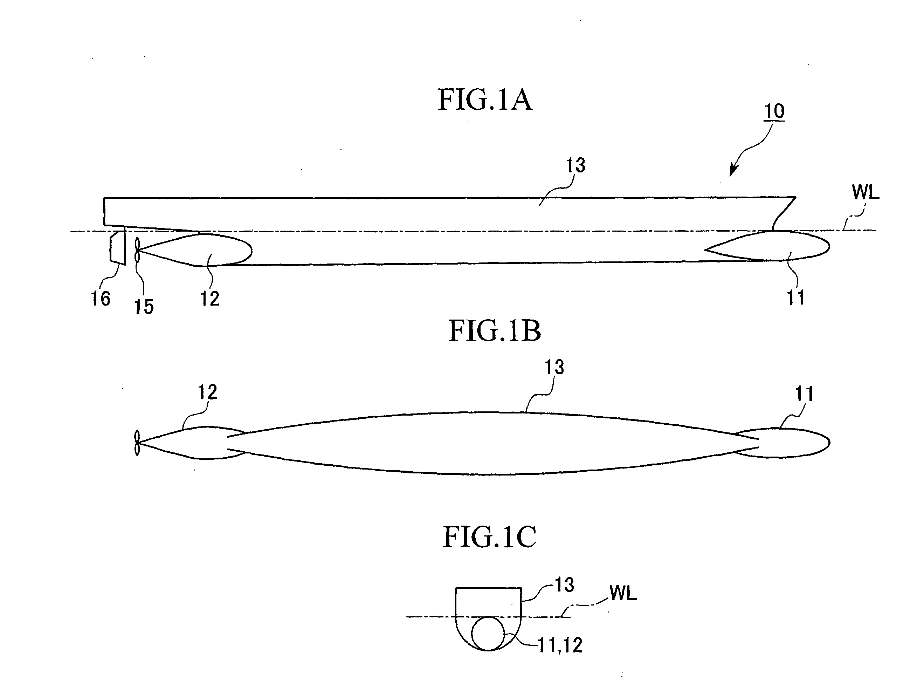

FIG. 1 is a diagram showing an example of the form of a ship according to an embodiment of the high-speed ship of the present invention, FIG. 1A shows a side view, FIG. 1B shows a plan view from the bottom of the ship, and FIG. 1C shows a transverse cross-sectional view at the midship. In FIG. 1, a high-speed ship 10 is mainly constituted by submerged bodies 11 and 12 which are placed below the water surface (waterline) WL at the bow and stem, and a main hull 13 which connects the submerged bodies 11 and 12, and hence the high-speed ship 10 has a composite type ship form in which a plurality of displacement objects of the submerged bodies 11 and 12 and the main hull 13 are combined.

In the high-speed ship 10, an optimum form of the sectional area curve of the main hull 13 is theoretically determined so that the wave resistance thereof is minimized to a draft/length ratio of 0.03 and a Froude number of 0.5 using the above-mentioned minimum wave resistance theory. More specifically, the volumes (displacement) of the submerged bodies 11 and 12 are determined in advance based on the depth at which the submerged bodies 11 and 12 are placed. Thereafter, the form of the main hull 13 which connects the submerged bodies 11 and 12 is determined. Note that the main hull 13 is disposed such that it penetrates the water surface WL.

Also, the submerged bodies 11 and 12 have a streamlined form, and the rear end of the submerged body 12 located at the stern is formed in a shape of sharp ended axisymmetric body. A propulsion device 15 is disposed at the rear end thereof. In this embodiment, the form of each of the submerged bodies 11 and 12 is determined so as to have a transverse cross-section of a circular, substantially elliptical, or substantially streamlined shape having a main axis in the length direction of the ship. Note that any shape of the submerged bodies 11 and 12 is acceptable as long as vortices or separation, i.e., increase in the resistance due to viscous flow separation, cannot be generated easily at the back of the submerged bodies 11 and 12. For this reason, the form is not limited to those shown in the figures, and can be arbitrarily determined. Accordingly, it is possible, for example, to add fillets, fairings, etc., to the form, and the form can be different at the bow and the stern of the ship

Moreover, each of the submerged bodies 11 and 12 has substantially the same volume and the same height of the center of gravity, and its volume corresponds to 3-10% of the volume of the main hull 13. Furthermore, the position of the center of gravity in the length direction of the submerged body 11 located at the bow substantially matches the for end of the ship, i.e., the point at which the main hull 13 intersects the water surface WL. Note that reference numeral 16 indicates a rudder, and the rudder 16 is disposed in the vicinity of the stem of the main hull 13 in this embodiment.

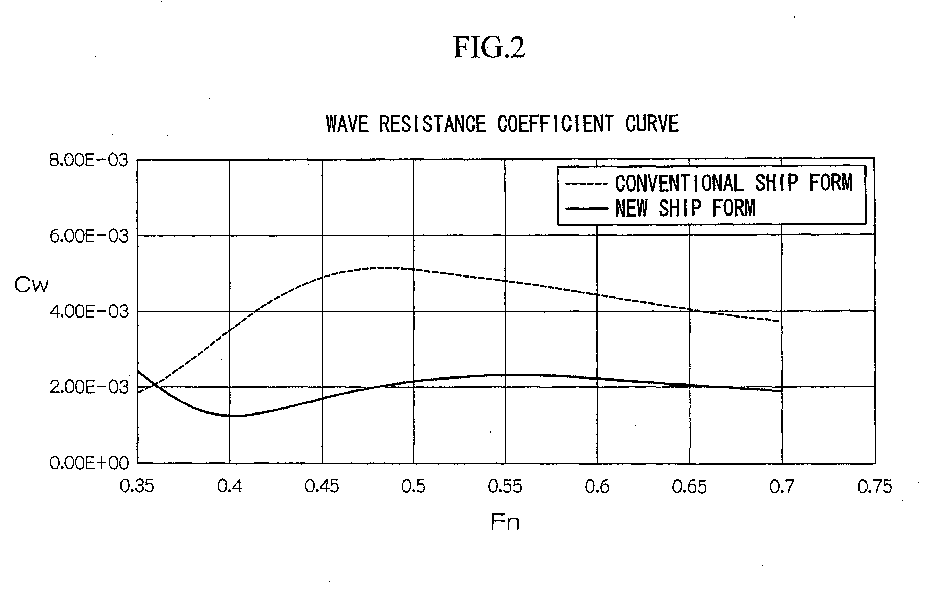

Here, the wave resistance of the high-speed ship 10 having the above-mentioned form is theoretically calculated. Also, a theoretical value of the wave resistance having a conventional form which is designed to minimize the wave resistance to as low as possible is calculated in comparison. The results are shown in FIG. 2.

As shown in FIG. 2, the wave resistance of the ship having the form according to the present invention decreases to 1/2 or smaller with respect to that of the ship having a conventional form at a Froude number of about 0.5. In the ship having a conventional form, a large peak, so-called last hump, appears in the wave resistance curve at a Froude number of about 0.45-0.5. On the other hand, no large peak appears for the ship having the form according to the present invention, and the wave resistance thereof is maintained to be low even in the high speed region of Froude number of a 0.36 or greater.

As described above, according to the embodiment of the high-speed ship by the present invention, since an increase in wave resistance can be prevented in the high speed region of a Froude number of 0.36 or greater, it becomes possible to suppress the total resistance and the required horsepower (maximum horsepower) of the engine to a low level, and hence, it becomes possible to reduce a fuel consumption. For this reason, the high-speed ship of the present invention can be readily applied in increasing to a high-speed as compared with a conventional high-speed ship, and can contribute to making distribution by sea efficient.

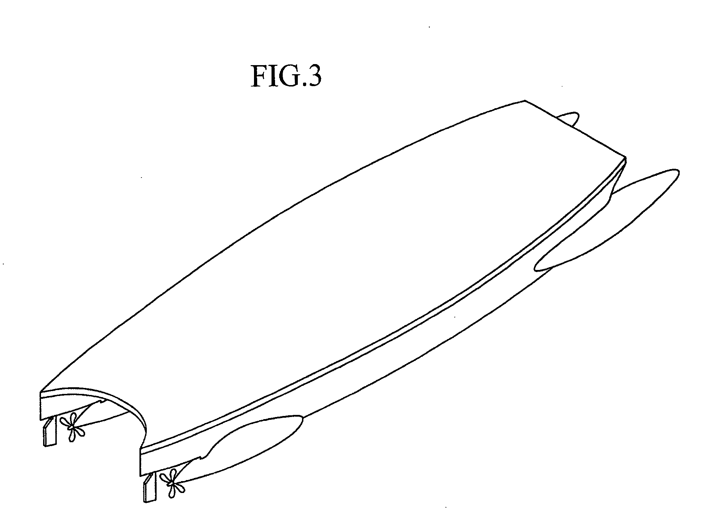

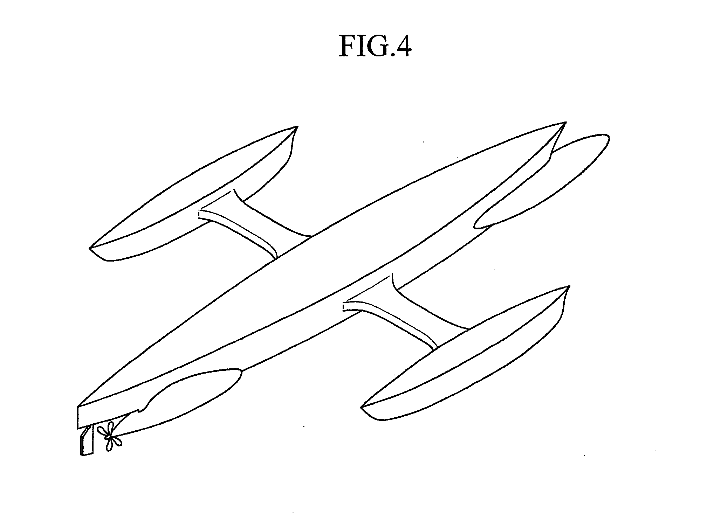

Note that it is preferable to make the high-speed ship of the present invention a multi-hull ship having a plurality of main hulls (for example, a catamaran ship, a trimaran ship, a pentamaran ship, etc.) since it is considered to be difficult to use the high-speed ship of the present invention shown in FIG. 1 with a single hull due to an insufficient lateral restoring force. FIG. 3 is a diagram showing an example in which the above-mentioned form of a high-speed ship is applied to a catamaran ship, and FIG. 4 is a diagram showing an example in which the above-mentioned form of a high-speed ship is applied to a trimaran ship. By adopting such a multi-hull form, it becomes possible to improve the stability in the balance of the ship.

Also, as a numerical example, suppose that the planned speed is 40 knots, and select 180 meters of waterline as the length of a ship having a Froude number close to 0.5 at 40 knots, then the draft of the ship having the form of the present invention becomes 5.4 meters. At that time, the submerged body is selected to have an ellipsoidal form having a major axis/minor axis = 4, and the diameter of the minor axis is made equal to the draft. If the main hull body is determined based on the above-explained theory, and considering a catamaran ship having a form combined with submerged bodies, then the total displacement including the submerged bodies reaches about 12,000 tons. By obtaining the total resistance using the theoretical values of the wave resistance shown in FIG. 2, and estimating the required horsepower, then it is considered that the required horsepower is about 100,000 shaft horsepower. Accordingly, it is determined that this value is sufficiently within a practical range.

Having thus described exemplary embodiments of the invention, it will be apparent that the present invention is not limited to those embodiments. In the above-mentioned embodiments, the forms of each structural component and combinations thereof are mere examples, and various alterations and modifications can be made based on design requirements, etc., within the spirit of the present invention.

Industrial Applicability

As explained above, according to the form of a high-speed ship by the present invention, it becomes possible to apply it to a high speed of 40 knots or faster and to minimize the required horsepower to the lowest level possible since the form can suppress .the wave resistance at a high speed range of a Froude number of 0.36 or greater. For this reason, by applying this form of a ship, it is possible to realize a large high-speed ship of 40 knots which conventionally could not be realized.

**Claims**

1. A form of a high-speed ship, comprising: submerged bodies, each of which is placed underneath a water surface at a bow and a stern; and a main hull which penetrates the water surface and connects the submerged bodies.

2. A form of a high-speed ship according to claim 1, wherein the main hull has a sectional area curve which is theoretically determined so that a wave resistance becomes minimum at a Froude number set at 0.36 or greater.

3. A form of a high-speed ship according to claim 1 or 2, wherein a volume of the submerged bodies is determined first, and then a form of the main hull which connects the submerged bodies is determined.

4. A form of a high-speed ship according to any one of claims 1-3, wherein the submerged bodies have a streamlined form.

5. A form of a high-speed ship according to claim 4, wherein the submerged body disposed at the stem has a form having a sharp rear end, and a propulsion device is provided therewith.

6. A form of a high-speed ship according to any one of claims 1-5, wherein a volume of each of the submerged bodies corresponds to 3-10% of a volume of the main hull.

7. A form of a high-speed ship according to any one of claims 1-6, wherein a position of center of gravity in a length direction of the ship of the submerged body disposed at the bow substantially matches a point at which the main hull intersects the water surface.

8. A form of a high-speed ship according to any one of claims 1-7, wherein the ship is a multi-hull ship including a plurality of main hulls.

9. A high-speed ship having a form according to any one of claims 1-8.

FIG.1A

FIG.1B

FIG.1C

## FIG.2

### WAVE RESISTANCE COEFFICIENT CURVE

EP 1 457 416 A1

FIG.3

EP 1 457 416 A1

FIG.4

EP 1 457 416 A1

## INTERNATIONAL SEARCH REPORT

| International application No. |
| --- |
| PCT/JP02/13230 |

A. CLASSIFICATION OF SUBJECT MATTER
   Int.Cl$^7$ B63B1/40, 1/10

According to International Patent Classification (IPC) or to both national classification and IPC

B. FIELDS SEARCHED

Minimum documentation searched (classification system followed by classification symbols)
   Int.Cl$^7$ B63B1/06, 1/08, 1/10, 1/40

Documentation searched other than minimum documentation to the extent that such documents are included in the fields searched
   Jitsuyo Shinan Koho          1926–1996   Toroku Jitsuyo Shinan Koho    1994–2003
   Kokai Jitsuyo Shinan Koho    1971–2003   Jitsuyo Shinan Toroku Koho    1996–2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 1-153396 A   (Kabushiki Kaisha Sanoyasu),<br>15 June, 1989 (15.06.89),<br>Full text; Figs. 1 to 6<br>(Family: none) | 1,4,9<br>2,3,5-8 |
| X<br>Y | JP 41-8820 B1   (Mitsubishi Heavy Industries, Ltd.),<br>10 May, 1966 (10.05.66),<br>Full text; Figs. 1 to 3<br>(Family: none) | 1,4,5,8,9<br>2,3,6,7 |
| Y | JP 55-110681 A   (Mitsui Engineering & Shipbuilding Co., Ltd.),<br>26 August, 1980 (26.08.80),<br>Full text; Figs. 1 to 8<br>(Family: none) | 1-9 |

☐   Further documents are listed in the continuation of Box C.     ☐   See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>   20 February, 2003 (20.02.03) | Date of mailing of the international search report<br>   04 March, 2003 (04.03.03) |
| --- | --- |
| Name and mailing address of the ISA/<br>   Japanese Patent Office | Authorized officer |
| Facsimile No. | Telephone No. |

Form PCT/ISA/210 (second sheet) (July 1998)

## INTERNATIONAL SEARCH REPORT

| International application No. |
| --- |
| PCT/JP02/13230 |

**Box I    Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:
The mater common to Claims 2 through 4 and 6 through 9 citing claim 1 is "an ultra-high speed vessel form comprising submerged bodies disposed below the water level at the bow and stern, and a main vessel body extending through the water level and interconnecting the submerged bodies." As a result of our search, this common matter has been found disclosed in the whole and Figs. 1-6 of JP 1-153396 A (Sanoyasu Co., Ltd.) 1989, 06, 15; thus, it is not novel. As a result, this common matter is no better than the prior art; thus, in the sense of the second sentence of PCT Rule 13. 2, it is not a special technical feature.    Therefore, there is no matter common to all of Claims 2 through 4 and 6 through 9 citing claim 1.    (Continued to extra sheet.)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1998)

11

**INTERNATIONAL SEARCH REPORT**

International application No.

PCT/JP02/13230

Continuation of Box No.II of continuation of first sheet(1)

Since there is no other common matter considered to be a special technical feature in the sense of the second sentence of PCT Rule 13. 2, a technical relationship in the sense of PCT Rule 13 cannot be found between these different inventions.

Therefore, it is clear that Claims 2 through 4 and 6 through 9 citing Claim 1 do not satisfy the requirement of unity of invention.

Form PCT/ISA/210 (extra sheet) (July 1998)